# EUROPEAN PATENT APPLICATION

(11) **EP 4 471 622 A1**
(43) Date of publication of application: **04.12.2024**
(21) Application number: 23315220.6
(22) Date of filing: 31.05.2023
(51) Int. Cl.: G06F 16/9535

(54) **PROCESSING SEARCH REQUESTS**

(71) Applicant: Amadeus S.A.S., 06410 Biot (FR)
(72) Inventor: TEXIER, Rodolphe, 06410 Biot (FR); DONMEZ, Fatih, 06410 Biot (FR)
(74) Representative: Samson & Partner Patentanwälte mbB

(57) **Abstract**

Processing queries from an unknown client in a distributed computing environment comprises: receiving, from the client, a search request comprising one or more search parameters and technical data related to the search request; retrieving, from a number of third-party platforms having communicated with the requesting client before receiving the search request, context data for the requesting client based on the technical data; generating an adapted search request based on the one or more search parameters and the retrieved context data. The method further comprises: preparing a number of search results corresponding to the adapted search request; and returning the number of search results to the client.

## Description

### FIELD

The present disclosure generally relates to database technology and in particular to processing requests from an unknown client.

### BACKGROUND

Generally, deterministic and short response time in complex search systems are desirable. Acceptable response times are a particular challenge in the case of so-called "open queries", which contain only little input information (e.g. containing only one or two specified parameters out of a dozen possible parameters and/or the specified value ranges of the parameters being broad). This, generally, leads to a large number of generic results. Possibilities to speed up data processing by increasing hardware performance are limited. Thus, attention is drawn to improving the operating mechanisms underlying the processing of request from unknown clients.

### SUMMARY

According to a first aspect, method for processing queries from a requesting client is provided. The method comprises: receiving, from the client, a search request comprising one or more search parameters and technical data related to the search request; retrieving, from a number of third-party platforms having communicated with the requesting client before or during receiving the search request, context data for the requesting client based on the technical data; generating an adapted search request based on the one or more search parameters and the retrieved context data. The method further comprises: preparing a number of search results corresponding to the adapted search request; and returning the number of search results to the client

In some embodiments, the technical data comprise user names and/or e-mail addresses and/or phone numbers and/or sessionIDs and/or browser cookies.

### BRIEF DESCRIPTION OF THE FIGURES

Aspects and examples of the present disclosure are described with reference to the following figures, in which:
FIG. 1 illustrated a distributed computing system as described herein.
FIG. 2A shows a sequence chart for the processing of queries from a requesting client.
FIG. 2B illustrates a sequence chart for the processing of queries from a requesting client according to a second embodiment.
FIG. 3 shows the data structure comprised in a search request.
FIG. 4 illustrates technical data as described herein.
FIG. 5 is schematic depiction of a worldwide distributed network of data centers, being an exemplar use case for the mechanisms described herein.
FIG. 6 is an example of possible worldwide path connections.
FIG. 7 illustrates disjunct computing systems as described herein.
FIG. 8 illustrates disjunct distributed computing systems as described herein.
FIG. 9 shows disjunct computing networks as described herein.
FIG. 10 illustrates the generation of adapted search parameters.
FIG. 11 illustrates the generation of adapted search parameters as described further herein.
FIG. 12 illustrates the generation of adapted search parameters using machine-learning based algorithms.
FIG. 13 illustrates the selection of databases as described herein.
FIG. 14 shows an exemplary use of search parameters.
FIG. 15 shows a distributed computing structure for performing database requests.
FIG. 16 gives an illustration of tables requested in a database request.
FIG. 17 illustrates a further example for the sequence chart of FIG. 2B.
FIG. 18 is a diagrammatic representation of the internal components of a computing machine as described herein.

### DETAILED DESCRIPTION

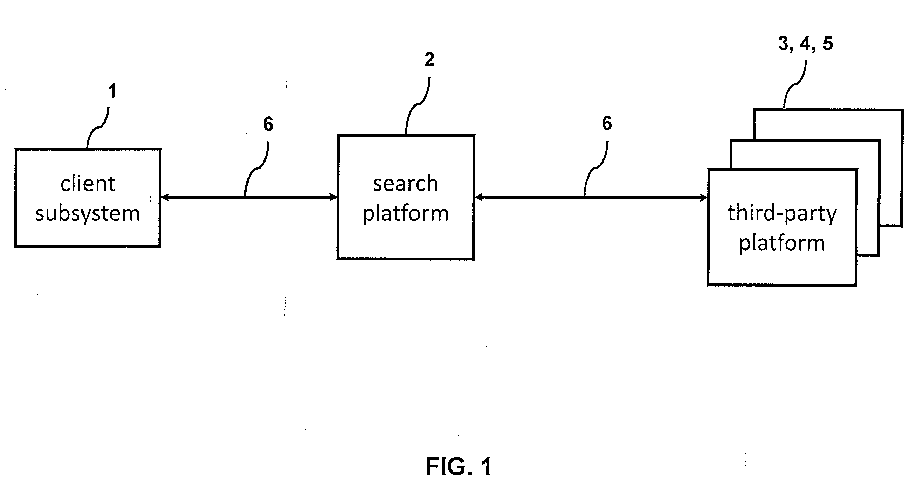

The present disclosure relates to processing queries from a requesting client. FIG. 1 shows a distributed computing system comprising a client 1, a search platform 2 and one or more third-party systems 3, 4, 5.

Client 1, search platform 2 and third-party systems 3, 4, 5 are located anywhere and are individual computing machines such as personal computers, mobile stations such as lap-tops or tablet computers, smartphones, and the like, as well as, in some embodiments, more powerful machines such as database application servers, distributed database systems respectively comprising multiple interconnected machines, data centers, etc. In some embodiments, the search platform 2 and the third-party systems 3, 4, 5 might be similar machines as the client 1, while, in other embodiments, the search platform 2 and the third-party systems 3, 4, 5 are more powerful than the client 1. In one embodiment, client 1, search platform 2 and third-party systems 3, 4, 5 are data centers which may be worldwide distributed.

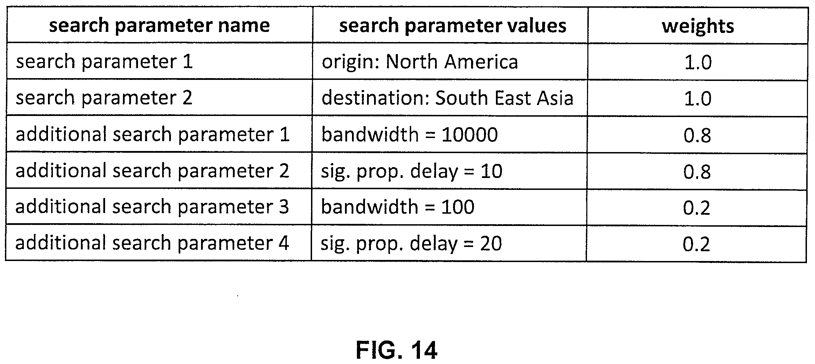

Client 1, search platform 2 and third-party systems 3, 4, 5 may be constituted of several hardware machines depending on performance requirements. Client 1, search platform 2 and third-party systems 3, 4, 5, are embodied e.g. as stationary or mobile hardware machines comprising computing machines 100 as illustrated in FIG. 14 and/or as specialized systems such as embedded systems arranged for a particular technical purpose, and/or as software components running on a general or specialized computing hardware machine (such as a web server and web clients).

Client 1, search platform 2 and the one or more third-party systems 3, 4, and 5 are interconnected by the communication interfaces 6. Each of the interfaces 6 utilizes a wired or wireless Local Area Network (LAN) or a wireline or wireless Metropolitan Area Network (MAN) or a wire-line or wireless Wide Area Network (WAN) such as the Internet or a combination of the aforementioned network technologies and are implemented by any suitable communication and network protocols.

Queries, such a search requests, which are requested from client 1 over the communication interface 6 are received at search platform 2. Search platform 2 may implement standardized communication protocols across the layers of the OSI reference model. Amongst others, the search platform 2 may employ initial processing mechanisms such as error recognitions and corrections, packet assembly, as well as determination whether a valid database query has been received. Invalid messages may be discarded already by the search platform 2 for reasons of security and performance.

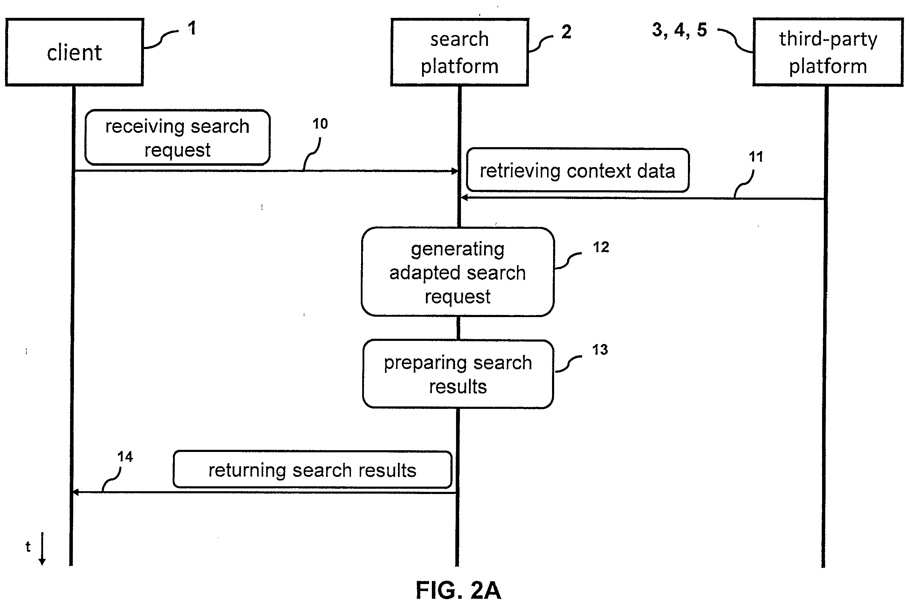

FIG. 2A shows a sequence diagram for processing queries from a requesting client according to some embodiments. In an activity 10, a search request comprising one or more search parameters and technical data related to the search request is received from the client 1. According to some embodiments, the search request may be received by the search platform 1. From a number of third-party platforms 3, 4, 5 having communicated with the requesting client before receiving 10 the search request, context data for the requesting client based on the technical data are received in an activity 11 by search platform 2. In an activity 12, an adapted search request based on the one or more search parameters and the retrieved context data is generated. The generation 12 of the adapted search request may be executed at the search platform 2. In an activity 13, a number of search results corresponding to the adapted search request is prepared, e. g at the search platform 2, and in an activity 14, the number of search results is returned to the client 1.In some embodiments, the preparing of the search results in activity 13 comprises the execution of rule-based algorithms, with the context data received from third party platforms 3,4,5 during activity 11 feeding the rule-based algorithms. In some embodiments, the returning 14 of the number of search results is executed by the search platform 2.

By the sequence as described and as shown in FIG. 2A, an optimized response to the search request may be generated for a new and unknown client by the generation of an adapted search request. Search platform 1 may receive 10 a search request from client 1, which may be a new client to search platform 2 since client 1 has never requested any services from search platform 2 before or any last search request from the client 1 was received prior to a certain past time frame so that the search platform 2 has deleted any search history data relating to such past search request from the client 1. The deletion of a search history by search platform 2 may have been executed due to a number of reasons, such as freeing storage resources or to comply with (legal) regulations with respect to data privacy. Search platform 2 has therefore no search history data relating to client 1 in its historical logs.

A search history of client subsystem 1 stored at search engine 2 might also relate only to a certain type of requests, such as search request comprising also a read request. Therefore, when search engine 2 receives form client subsystem 1 a new type of request, such as a search request comprising a write request, the search history stored at search engine 2 gives no indication for search engine 2 how to handle this type of request effectively. However, at other search engines, search requests including a write request originating from client subsystem 1 might have already been received, therefore the search histories stored at these search engines have already indications how to handle such requests for client subsystem 1 available.

The type of a search request may also be defined by the requested content. In some examples, the content may comprise data relating to the transmission of data over networks, to data describing traffic situations or to data describing the properties of electronic components and circuits etc.

The search request received by the search platform 2 includes search parameters and technical data of client 1. The technical data may be encrypted or hashed. As mentioned above, no data is currently available at search platform 2 to determine a search history of client 1, in order to determine which data client 1 has requested so far and further, which type of additional data were included in past responses in order to send an optimized responses to client 1. However, there may be other computing systems, such as third-party systems 3, 4, 5, which have already received and processed requests from client 1, and therefore have in their historical logs data available, such as context data, which relate to the identity of client 1 and the search history of client 1. In some embodiments, the context data may relate to a user of client 1. These third-party systems may be computing systems which are entirely distinct and separated from search platform 2.

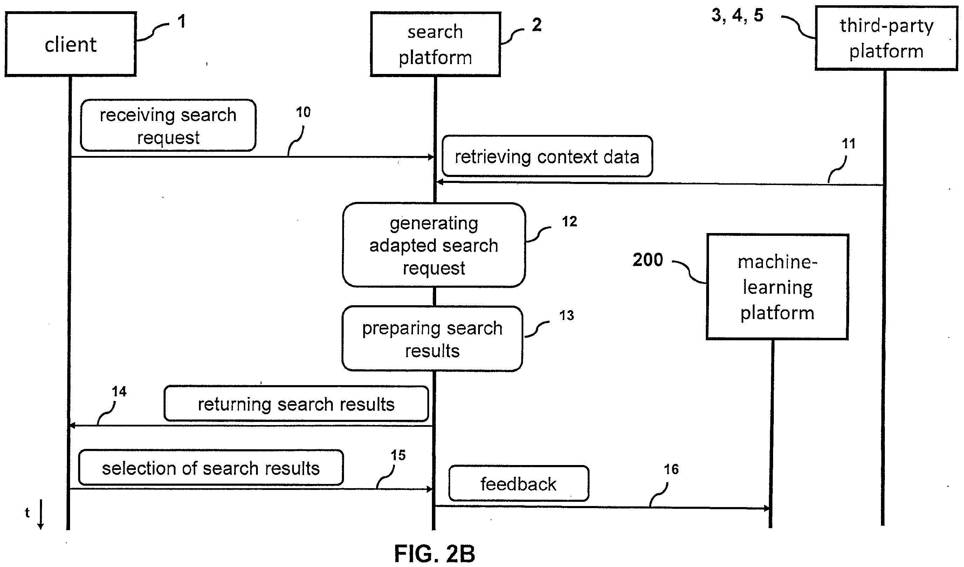

In some embodiments, as illustrated in FIG. 2B, the sequence as described above and shown in Fig. 2A may comprise, in activity 15, a client-based response to the search results returned to client 1 in activity 14. Such a response may comprise, by the client 1, the selection of one or more of the search results for further processing. The further processing may comprise, in some embodiments, the sending of the selected search results to the search platform 2. The embodiment, as shown in FIG 2B, further comprises in response to activity 15, sending, in activity 16, a feedback to a machine learning platform 200. The feedback may comprise information about the selection of the search results executed by client 1 in activity 15.

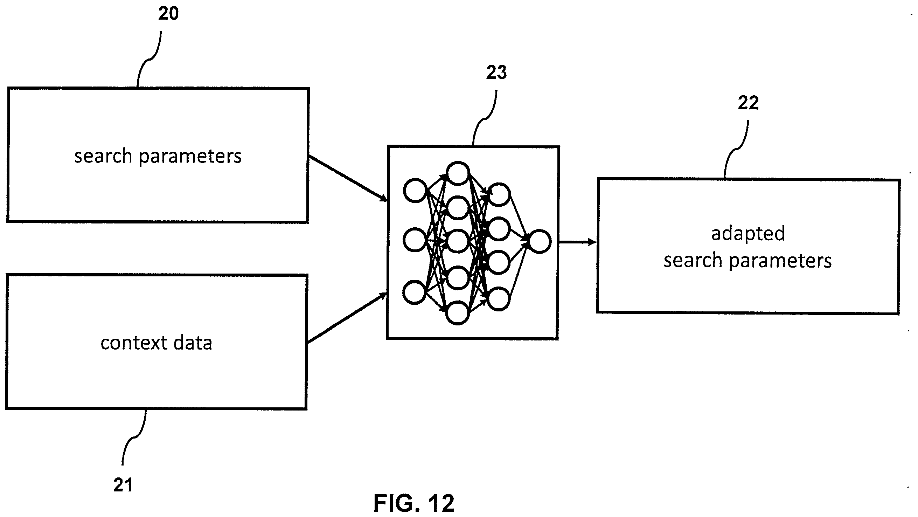

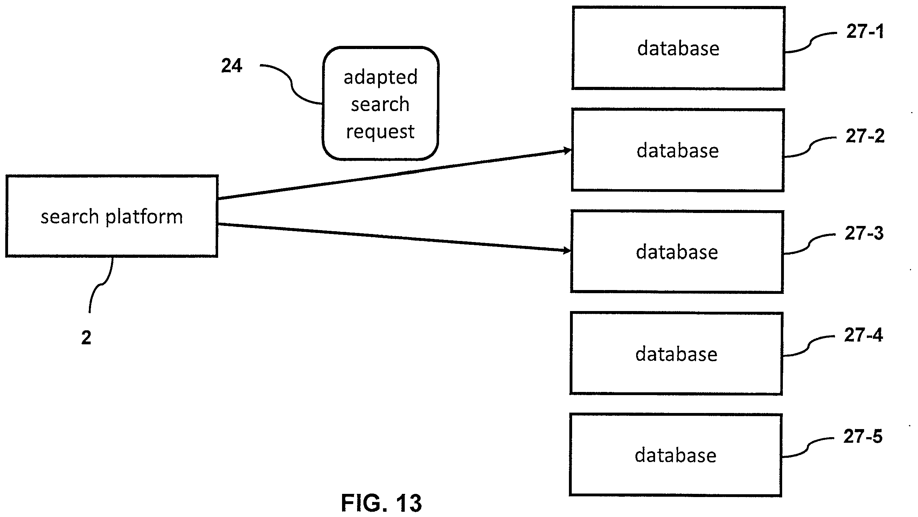

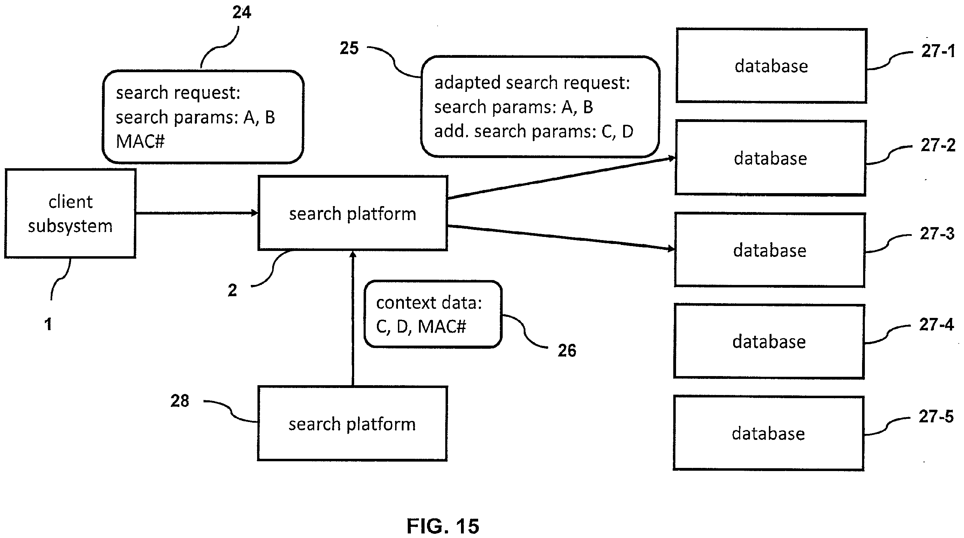

In some embodiments, machine learning platform 200 uses the data comprised in the feedback to feed the rule-based algorithms for the generation of the search results. The feedback data may be fed into the rule-based algorithms together with the context data. The feedback may also be used to train any machine learning modules or machine learning networks of the machine learning platform 200, such as machine-learning based algorithms 23 (shown in FIG. 12), in order to further improve or refine the functionalities described herein, in particular generating 12 the adapted search request. In some embodiments, the machine learning platform 200 may be comprised by a database such as databases 27-1 to 27-5 shown on FIGs. 13 and 15. In some embodiments, the machine learning platform 200 may be comprised by third-party platform 3, 4, 5.

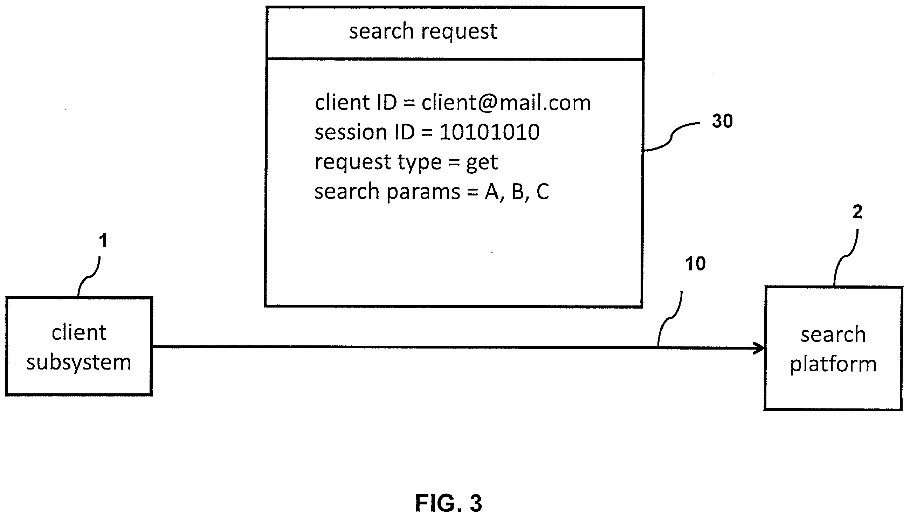

FIG. 3 shows an example for a data structure of a search request 30 sent by the client subsystem 1 to search platform 2 in activity 10. An email-address serves as an identification of the client-subsystem 1 (client-ID) forming part of the technical data comprised by the client-subsystem 1. The search request 30 further comprises as technical data the session ID of the current session between the client-subsystem 1 and the search platform, having the exemplary value of 10101010 and the request type of the search request 30. In the example of FIG. 3, the request type is set to "get", implying that client subsystem 1 requests data fulfilling the search parameters "A", "B" and "C", included as content data. Search request 30 may comprise other data structures as those shown in FIG. 3. As an example, the client ID may comprise an IP-Address or a MAC-Number of the client-subsystem 1. To cite a further example, the client ID may comprise a user-name associated with the client-subsystem, which may comprise a name given to a computing system, such as "HAL-9000" or a name attached to a person/user, such as "David Bowman". As a further example, the session ID may comprise a calendar data and/or a tome stamp, such as 2022-12-10, indicating a calendar date, and/or 08:15:56, indicating a time stamp. Further examples for request types may be a search request comprising a read request, or a write request, a create or delete request, etc.

When processing requests from clients, search platform 2 usually does not receive any data from these third-party systems. When acquiring data on search histories of new clients, such as client 1, however, search platform 2 then requests third party systems 3, 4, 5 for context data relating to client 1. The context data relating to client 1 are based on technical data the third-party platforms 3, 4, 5 have captured from client 1 within its previous interaction. The context data may be based on technical data such as the identity of requesting client 1. Based on that context data received from the third-party systems 3, 4, 5, search platform 2 may confirm the identity of client 1 and determine its search history, updated status such as recent purchases, and general preferences. Search platform 2 then generates an adapted search request. Based on this adapted search request, additional data for client 1 are retrieved, in addition to those data which are retrieved based on the search parameters the search platform 2 has received with the search request from client 1. Therefore, an optimized response may be generated by search platform 2 for a client, which is new and thus so far unknown to search platform 2.

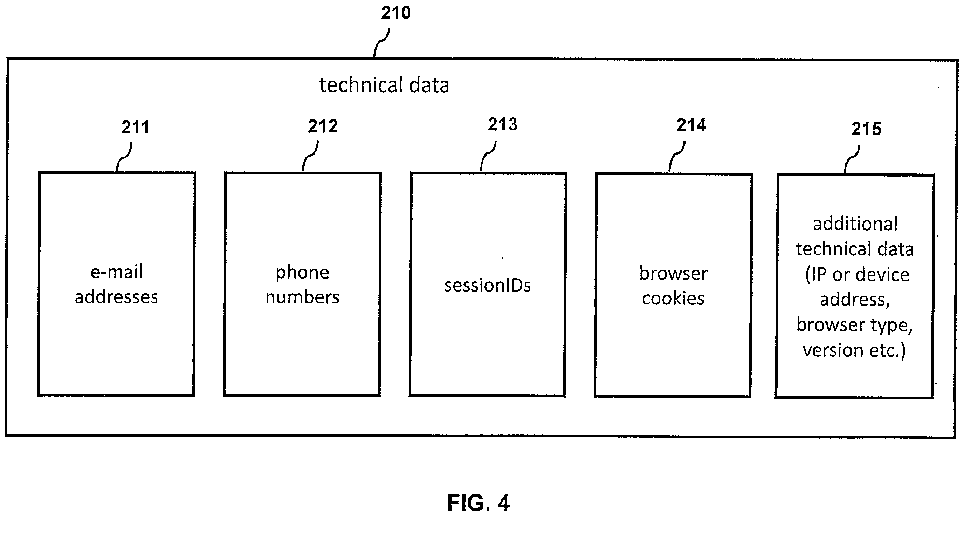

As shown in FIG. 4, in some embodiments, the technical data 210 may comprise user names and/or e-mail addresses 211 and/or phone numbers 212 and/or sessionIDs 213 and/or browser cookies 214. These data relate to the identity of requesting client 1 and serve as a basis for the processing of the context data as retrieved from third-party systems by search platform 2. In some further embodiments, the technical data 210 may comprise 215 the IP address or the device address of client 1 or data relating to the identity of the browser, such as the browser type and/or the browser version client 1 or a user of client 1 is using when interacting with entities such as a third-party platform 3, 4, 5.

The context data received from the third-party systems 3, 4, 5 comprise the search history of client subsystem 1 at these third- party systems. In addition, the context data comprise sessionIDs, browserIDs, cookies, IDs of the third-party host etc. relating to sessions held by the client-subsystem 1 with (one or more of) the third-party systems before receiving the search request of activity 10.

One or more parts of technical data in the search query of client subsystem 1 is used to identify any relevant context data originating form third-party systems and relating to client subsystem 1. By assessing the relationships between the data relating to the identity of client 1 and the data relating to the search history of client 1, search platform 2 is able to determine a search history for is new client 1 and therefore to generate an adapted search request.

The content and character of the search data requested by the client and to be returned to the client is not decisive for the present disclosure. Rather, the present methodologies are applicable for any types of data requested by the client. As a non-limiting example for executing the sequence illustrated in FIG. 2A, 2B, network routing requests for transmitting data over distributed networks are discussed.

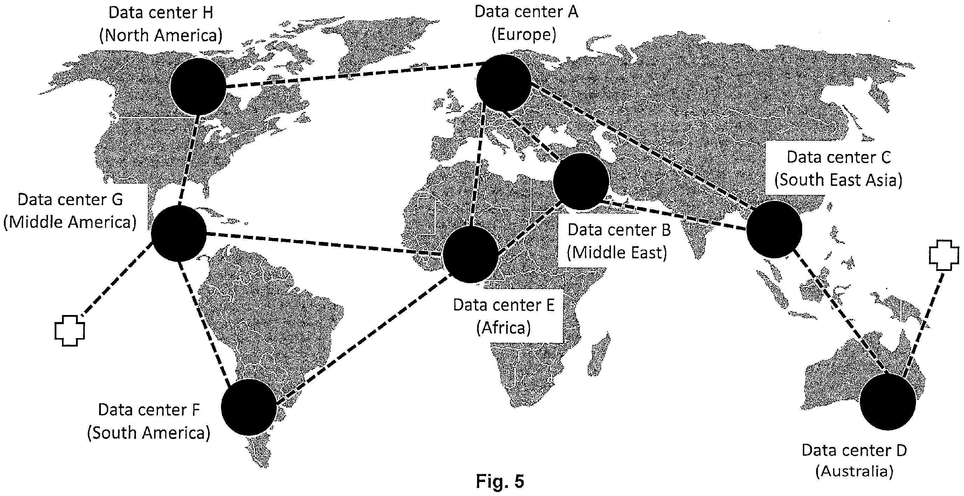

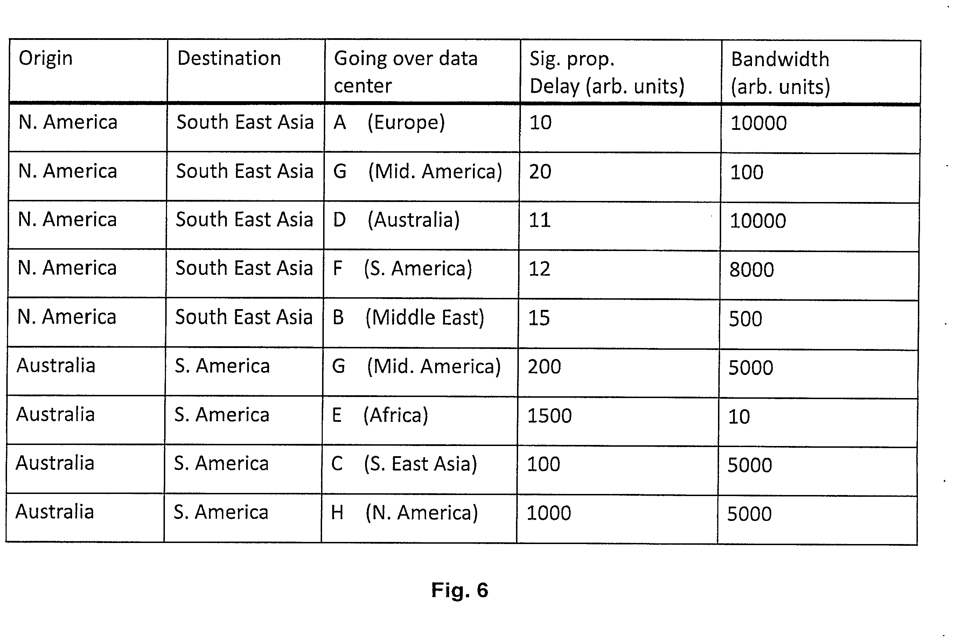

FIG. 5 shows a worldwide network with globally distributed data centers, such as data center A located in Europe, data center C located in South East Asia, data center H located in North America etc. The table of FIG. 6 shows the transmission capabilities of some of these data centers, over which a data transmission between two distinct geographical regions, such as between North America and South East Asia, goes over. The capabilities shown in the table of FIG. 6 are the signal propagation delay and the bandwidth, both expressed in arbitrary units (a. u.). The data centers are interconnected via communication interfaces utilizing a wired or wireless Local Area Network (LAN) or a wireline or wireless Metropolitan Area Network (MAN) or a wireline or wireless Wide Area Network (WAN) such as the Internet or a combination of the aforementioned network technologies and are implemented by any suitable communication and network protocols. A client, such as client 1, had to transmit huge volumes of data from North America to South East Asia.

Client 1 therefore transmits a search request for a data connection e. g. to data center G located in Middle America (activity 10 of FIG. 2A, 2B), with data center G acting as search platform 2. Client 1 does not specify all relevant search parameters in the search request. For example, the search request indicates the desired amount of data to be transmitted, but not any optional quality-of-service details for the required data connection, such as bandwidths and signal propagation delays. Furthermore, the search request sent by client 1 is the first request data center G has received from client 1 so far. Data center G therefore does not have any information about the details of the requested data connection, neither from the search request itself nor from a search history so far available to data center G. In order to carry out an efficient search as search engine, data center G first retrieves information on the details of the data connection client 1 has requested. Data center G therefore sends a request for context data related to client 1 to third-party platforms, such as data center A located in Europe and to data center B located in the Middle East. The request for context data comprises e. g. an email-address of client 1 which data center G has identified in the technical data (such as technical data 210 in FIG. 4) related to the search request by client 1. In the present example, data center B (Middle East) does not have any context data comprising an email-address related to client 1 or any other corresponding data related to the identity of client 1 and therefore, the response by data center B to data center G does not comprise any data relating to client 1. Data center A (Europe), however, can identify in its stored context data the email address of client 1 received from data center G since data center A has a search history of client 1 stored in its memories as client 1 has previously requested data transmissions over data center A. Therefore, in its response to data center G, data center A includes the corresponding context data relating to the search history of client 1 at the data center G (activity 11 of FIG. 2A, 2B).

Analyzing the received context data through data center G obtained the result that client 1 so far has used for its data transmissions connections with a bandwidth of 10000 and a signal propagation delay of 10. Acting as search platform 2, data center G generates an adapted search request (activity 12 of FIG. 2A, 2B) directed to data transmissions with a bandwidth of around 10000 and a signal propagation delay of around 10. As shown in the table of FIG. 6, data connections from North America to South East Asia going over data center A (Europe), data center D (Australia) and F South America can offer data connections with a signal propagation delay of 10, 12 and 15 and a bandwidth of 10000 and 8000, respectively. Tables with corresponding data relating to transmission capabilities may be stored e. g. in the memories of database G or may be retrieved by database G from any other data stores. When, in response to the adapted search request, the corresponding search results are prepared at data center G, the transmission capabilities of the connections over data centers A, D and F are included, optionally in addition to the limited transmission capabilities of data center G itself, which can only offer, according to FIG. 6, a signal propagation delay of 20 and a bandwidth of 100. Therefore, when returning the search results to client 1 by database G (activity 14 of FIG. 2A, 2B), the transmission capabilities of data centers A, D and F are included. Without using the sequence as presented in FIG. 2A, 2B, data center G would only be able to include in the response to client 1 its own limited transmission capabilities of a bandwidth of 100 and a signal propagation delay of 20 or to return an empty response.

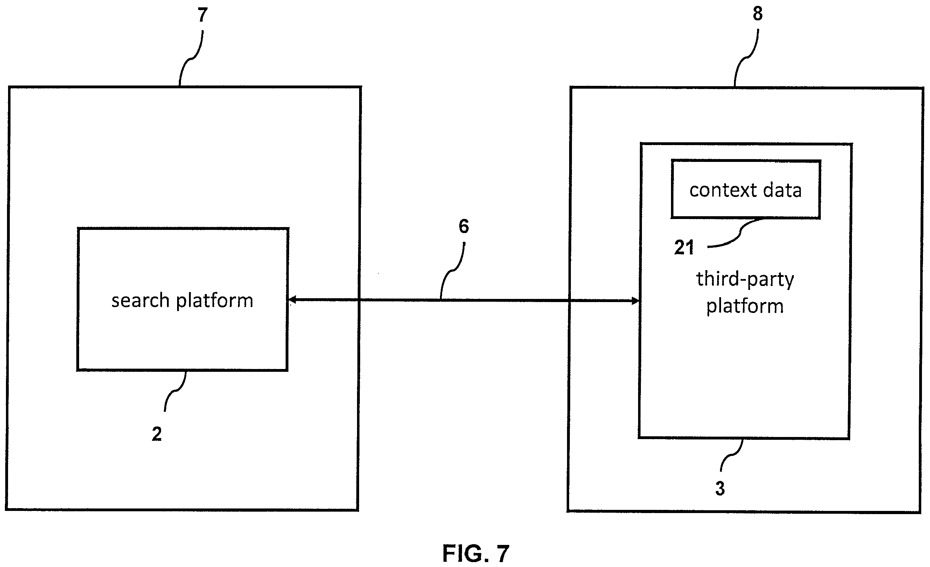

In some embodiments, the context data is further based on client-based requests received at least one of the number of third-party platforms 3, 4, 5 and on corresponding responses generated at these platforms and/or third-party technical data generated at the at least one of the number of third-party platforms in response to the client-based requests. FIG. 7 illustrates requesting client 1 belonging to a computing system 7 and a third party 3 platform belonging to computing system 8. Client 1 and third-party systems 3 are interconnected by the communication interfaces 6. The requests of client 1 to the third-party platform 3 have been received and been responded by third party platform 3 before the requests of client 1 are transmitted to search platform 2. The context data 21 comprise on one hand context data embedded in the requests third-party platform 3 has received from requesting client 1 and on the other hand context data embedded in the corresponding responses of third-party system 3 to client 1. The context data 21 has been stored on third-party system 3. The context data 21 comprise data relating to the identity of client 1, such as e. g. user names and/or e-mail addresses 21 and/or phone numbers 22 and/or sessionIDs 23 and/or browser cookies 24 relating to client 1. The context data 21 may also comprise data relating to the identity of third-party platform 3. When analysing these context data 21, search platform 2 will be able to determine the identity of requesting client 1 e. g. in the case the search request sent to search platform 2 in activity 10 is a first request of client 1 to search platform 2. Referring to the example discussed above and shown in FIGs. 5 and 6, the context data e. g. stored in the memories of data center A comprise the context data of previous requests of client 1 to data center A and the context data of corresponding responses of data center A to client 1.

In some embodiments, the search platform 2 and at least one of the number of third-party platforms 3, 4, 5 belong to disjunct computing systems. FIG. 7 shows the disjunct computing systems 7 and 8, to which search platform 2 and third-party platform 3 belong to respectively. Computing system 8 does not share any infrastructure and/or components with the computing system 7 to which search platform 2 belongs to. Usually, there is also no transmission of technical and context data between search platform 2 and computing system 8 without any prior initialization or request, therefore, any data relating to client 1, which is stored already within computing system 8, such as on third-party platform 3, is not transmitted to search platform 2 on a regular scale. The sequence as shown in FIG. 2, however, enables the transmission of the data relating to client 1 to the search platform 2 by initializing, through activity 11, the retrieval, by e. g. search platform 2, of the corresponding context data with the client 1 related data embedded therein. Referring again to the example relating to data transmission (FIGs. 5, 6), data center A has its context data relating to client 1 transmitted after a corresponding retrieving request of data center G.

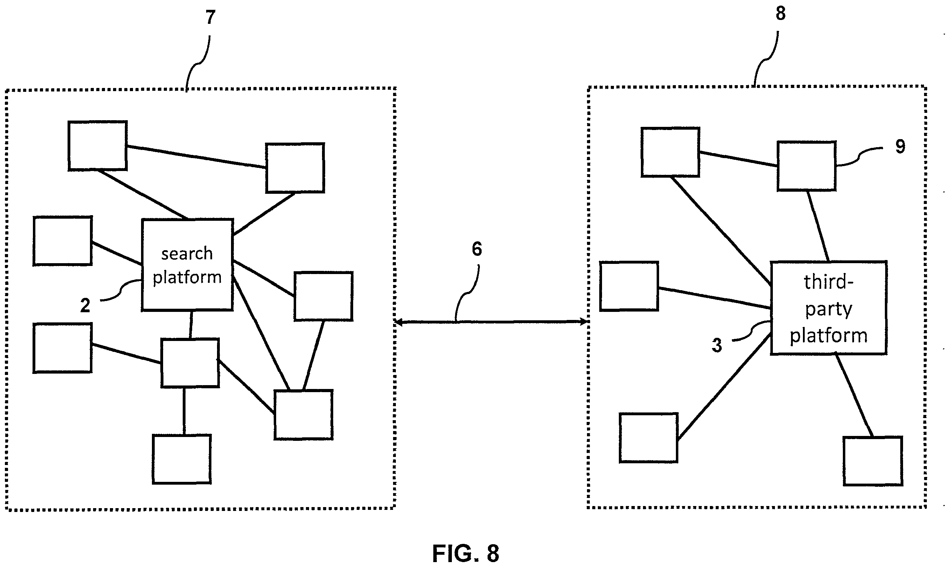

In some embodiments, the disjunct computing systems comprise disjunct distributed computing systems and/or disjunct computing networks. FIG. 8 illustrates search platform 2 being part of a distributed computing system 7, whereas third-party platform 3 forms part of distributed computing system 8. Distributed computing systems 7 and 8 are via some of its components (not shown in FIG. 6) interconnected by the communication interfaces 6. Client 1 (not shown) is not known to the components of the distributed computing system 7 of which search platform 2 forms part of. Client 1 is, however, known to some or all components of distributed computing system 8, through previous requests transmitted to third-party platform 3 and the corresponding responses client 1 has received in response to the previous requests. Since third-party system 3 is part of the distributed computing system 8, the context data may not be stored at the third-party platform 3 itself, but at another component of distributed computing system 8, such as e. g. component 9, which may be associated with third-party platform 3, as shown in FIG. 6. Third-party platform 3 is therefore relieved from the additional burden to store context data resulting from previous searches and responses and search platform 2 retrieves in activity 10 the context data from component 9. The data centers shown in FIG. 5, such as data centers A, C and G, may comprise of distributed computing systems, such as computing machines used for the transmission of data, data storage units and search engines. Context data may e. g. stored in storage units, while the search engines execute client-based search requests and prepare the corresponding responses.

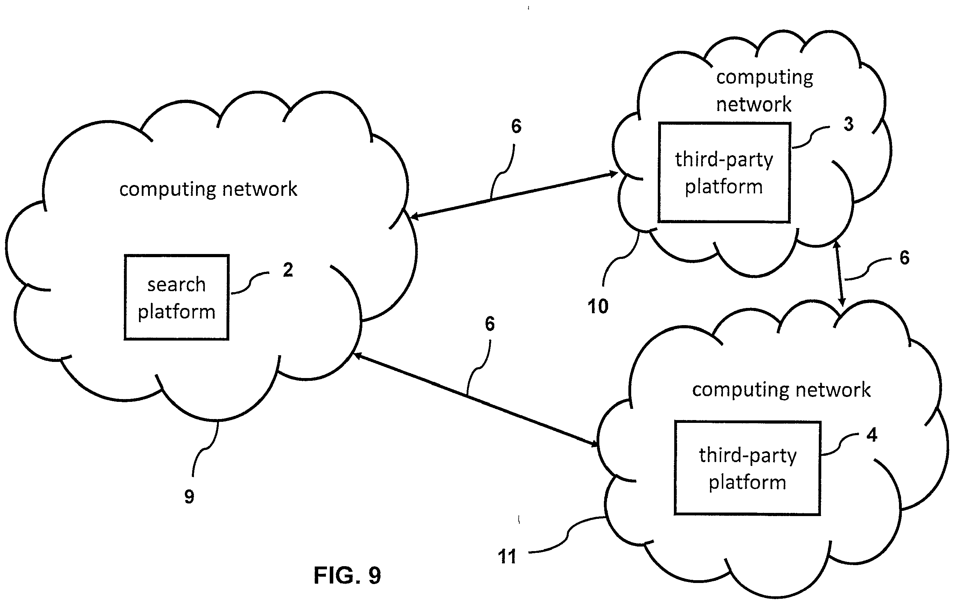

In some embodiments, the disjunct computing systems comprise disjunct distributed computing systems and/or disjunct computing networks. FIG. 9 illustrates requesting search platform 2 residing in computing network 9, third-party platform 3 in computing network 10 and third-party platform 4 in computing network 11. Client 1 may be known e. g. to computing networks 10 and 11, but not to computing network 9 wherein search platform 2 resides in. The sequence as shown in FIG. 2 enables the transmission of the data relating to client 1 to the search platform 2 by initializing, through activity 11, the retrieval, by e. g. search platform 2, of the corresponding context data over networks operating under different technologies. Referring again to the aforementioned example shown in FIGs. 5 and 6, data center G, as search platform 2, may be comprised by a LAN-network and data center A, as a third-party platform, by a MAN-network, each using also legacy technologies for some or all of their components. By carrying out the sequence of FIG 2, it is possible to transmit the context data requested by data center G over the technological boundaries the various networks constitute.

In some embodiments, generating the adapted search request comprises the generation of one or more adapted search parameters based on the one or more search parameters and/or the context data. In some embodiments, the adapted search parameters may comprise additional search parameters, which may narrow the search space that would normally be spanned by the (entered) search parameters of the search request 20 alone. In some embodiments, the adapted search parameters may modify or replace one or more of the search parameters (entered) by the search request, becoming more specific search parameters thereby modifying the search space.

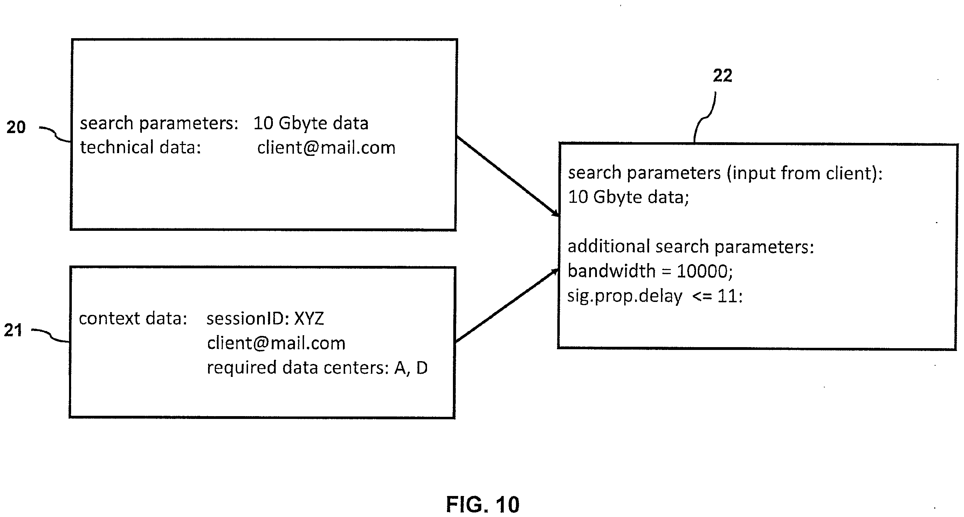

FIG. 10 shows the generation of additional search parameters for adapted search request 22, which is based on the search parameters of search request 20, included in the search request received e. g. at the search platform 2 from client 1, and on the context data 21, retrieved e. g. by the search platform 2 from third-party systems 3, 4, 5. Since the search parameters of search request 20 included in the (original) search request of activity 10 of FIG. 2 also form the basis for the generation of the additional search parameters for adapted search request 22, parts of the context data 21 which would result in the generation of additional search parameters adapted search request 22 not relevant for the search initialized by client 1 in its search request are not involved in the generation of the additional search parameters for adapted search request 22. The generation of the one or more additional search parameters enables the reduction of the search space which would have been spanned if the search parameters of search request 20 of the search request by client 1 would be used alone. By using the additional search parameters for adapted search request 22 derived from the context data 21, however, the search space is narrowed, even in the case the requesting client 1 and its previous search history is unknown to search platform 2 so far and the search parameters of search request 20 only enable a coarse determination of the direction of the search, resulting in the retrieval of a great number of results. In some embodiments, the generation of the additional search parameters for adapted search request 22 is based only on the context data 21, e. g. in the case the search parameters of search request 20 are formulated in such a way that no search topic may be identified. Citing the example shown in FIGs. 5 and 6, only data connection with a bandwidth of around 10000 and a signal propagation delay of 10 have been requested by client 1 in its previous requests to data center A. Any tables stored e. g. in the data stores of data center G which contain data connections using data centers with lower capacities for data connection therefore may be excluded from the query even before the query is to be started, thereby reducing the number of tables which have to be queried to those tables containing relevant data, such a data relating to data connections with a bandwidth of around 10000 and a signal propagation delay of 10. Referring to FIG. 10, the technical data included in an email of requesting client subsystem 1, e.g. "client@mail.com", may refer to an identity of that client. In the context data 21, the same email-address is comprised, which can be used to relate the search history indicated in these context data to requesting client-subsystem 1. Referring further to FIG. 10, context data 21 indicated that the search history of client-subsystem 1 comprise data transmission requests comprising data centers A and D, having both a bandwidth of 10000. Based on these data comprised in the context data received by data center G from a third-party system, such as data center A, additional search parameters are created and added to the search request. The additional search parameters in the example of FIG. 10 comprise a bandwidth of 10000 and a signal propagation delay of equal or less than 11. The search request sent in activity 10 by client-subsystem 1 therefore gets correspondingly narrowed by narrowing the search space with leaving out all that data transmission connections which do not fulfil these requirements. On the other hand, those part of the context data not relating to the search history, such as e. g. the session ID = XYZ are not used for the creation of the additional search parameters.

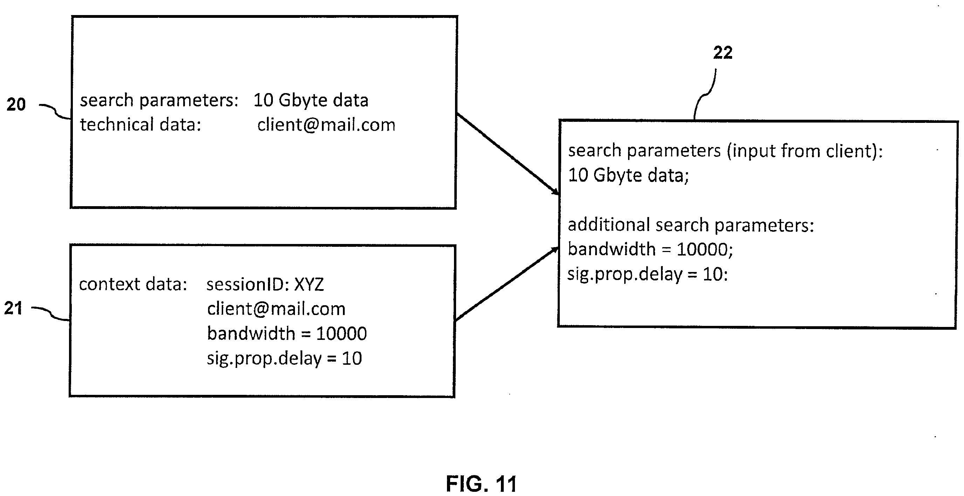

In some embodiments, the generation of the adapted search request is based on adapted search parameters derivable from the retrieved context data, as illustrated in FIG. 11. The example of FIG. 11 illustrates the case where the adapted search parameters comprise additional search parameters, which are added to the search parameters of search request 20. The context data 21 may already indicate those additional search parameters from the previous requests of client 1 received at the third-party platforms 3, 4, 5. The indicated additional search parameters comprised in the context data 21 in the example shown in FIG. 11 are a bandwidth of 10000 and a signal propagation delay of equal or less than 11. By e. g. extracting already existing relevant additional search parameters for adapted search request 22 at the search platform 2, it is not necessary to generate new additional search parameters. The relevancy of the already existing additional search parameters comprised by the context data 21 may be assessed at the search platform 2 e. g. by using the search parameters of search request 20 of the search request of activity 10 (FIG. 2). In the example cited within this disclosure and shown in FIG. 11, the context data stored at data center A may comprise search parameters resulting from previous searches of client 1 and relating to required data transmission characteristics for transmissions from North America to South East Asia, such as the band width and signal propagation delay, as shown in FIG. 11 (which can also be found in FIG. 6). Since the search request received in activity 10 of FIG. 2 at data center G from client 1 is related to a requested data transmission from North America to South East Asia, the corresponding aforementioned search parameters comprised in the context data then may be included directly and without any further modifications as additional search parameters in the adapted search request that is generated in activity 12 of FIG. 2. This is exemplarily shown in FIG. 11, where the search parameters relating to the bandwidth and the signal propagation delay comprised in the context data 21 will be extracted and directly comprised without any modification as additional search parameters and included in the adapted search request 22.

In some embodiments, the adapted search parameters in adapted search request 22 are generated using machine-learning based algorithms 23, as shown in FIG. 12. The machine-learning based algorithms may be based on neural networks and/or supervised learning and/or unsupervised learning and/or reinforcement learning and/or decision trees. The use of machine-learning based algorithms for the generation of the adapted search parameters of adapted search request 22 enables a flexible and efficient generation of the adapted search parameters of adapted search request 22 for a broad and fluent range of search topics. Especially, when requesting client 1 is so far unknown to search platform 2 and there is no search history relating to client 1 is available for search platform 2, machine-learning based algorithms 23 enable an efficient assessment of the retrieved context data 21 on the basis of the search parameters 20 for the generation of adapted search parameters of adapted search request 22, which are relevant for the intended search topic reflected in the search parameters of search request 20 of the search request of client 1. In the example cited within the disclosure, a machine-learning algorithm either identifies already existing adapted search parameters in the context related data received at data center G from data center A or generates the adapted search parameter on the basis of the context data. The machine-learning algorithm is trained to identify in the context data those data relevant for the characteristics of data transmission such as required bandwidths and signal propagation delays.

In some embodiments, generating the adapted search request comprises selecting one or more databases from a number of databases and transmitting the adapted search request to the one or more of the selected databases. FIG. 13 illustrates search platform 2 transmitting an adapted search request to databases 27-2 and 27-3, selected from databases 27-1 to 27-5. Each of the databases 27-1 to 27-5 may store different data, such as data relating to different topics or having a different data format or a different validity etc. Based on the generation of the adapted search request, especially the generation of the adapted search parameters for the adapted seach request 22, an assessment of the databases 27-1 to 27-5 that may be executed by the search platform 2 found that e. g. databases 27-1, 27-3 and 27-5 store only such data that a response to an adapted search request directed to these databases would result in retrieving no or irrelevant data, even in the case of a time-consuming and complex search in these databases. In order to perform an efficient search, only databases 27-2 and 27-3 will be included in the search, since the assessment has found that a response to the adapted search request directed these databases world result in the retrieval of relevant data. Further citing the aforementioned example, since data center B located in the Middle East (FIG. 5) can only offer data transmissions with a bandwidth of around 500 and a signal propagation delay of 15, the adapted search request generated by data center G will not query the databases of query data center B at all, since the requested transmission requirements of client 1 are far outside of the transmission capabilities of data center B.

In some embodiments, the preparation of the number of search results comprise weighting the search parameters and the adapted search parameters using weighting factors, wherein the weighting factors are generated based on the retrieved context data. The table shown in FIG. 14 gives an example for weighting of a number of search parameters and adapted search parameters. Data center A has, within activity 10 of FIG. 2A, 2B, received from client 1 a search request for a data connection from North America to South East Asia, however, without specifying any further details, such as required bandwidth and signal propagation delay. Analyzing the retrieved (activity 11 of FIG. 2A, 2B) context data, e. g. from data center A, yielded that the client 1 has used for 80% of its previous data connections at data center A a bandwidth of 10000 and a signal propagation delay of 10 and for 20% of its previous data connections a bandwidth of 100 and a signal propagation delay of 20. The adapted search parameters for the adapted search request are therefore weighted in such a way that the corresponding parameters relating to the data connection with a bandwidth of 10000 and a signal propagation delay of 10 are weighted with a weight factor of 0.8 and those parameters relating to the data connections with a bandwidth of 100 and a signal propagation delay of 20 are weighted with a weight factor of 0.2, as also illustrated in the table of FIG. 14. A differential search history of a client, comprising several different topics which each being represented by a different set of adapted search parameters is therefore being weighted appropriately in order to generate a response adequately addressing the requesting clients search intentions.

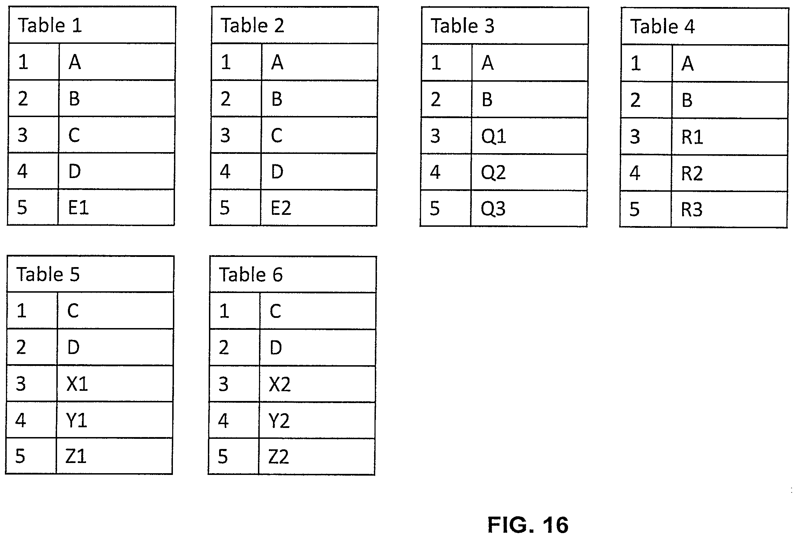

FIG. 15 shows a distributed computing structure for performing database requests. A search platform 2 receives, in an activity 10 as also shown in FIG. 2A, 2B, a search request 24 from client subsystem 1. The search request comprises, besides the technical data (as shown e. g. in FIG. 4), search parameters A and B, in order to get tables received with content comprising A and B, the tables being stored in the database 27-1 to 27-5. In addition, search platform 2 receives technical data from search platform 1, comprising e. g. the MAC-number of client subsystem 1. FIG. 16 shows, as an example, tables 1 to 4 comprising content A and B stored in their lines 1 and 2. The content in lines 3 to 5 differ for all tables 1 to 4, however, tables 1 and 2 further share in their lines 3 and 4 the same content C and D. Furthermore, the content C and D is comprised by tables 5 and 6 in their lines 1 and 2. Table 1 is stored at database 27-2, table 2 at database 27-3. Furthermore, table 3 is stored at database 27-1, table 4 at database 27-4. Tables 5 and 6 are stored at database 27-5.

Search platform 2 receives, in activity 11 as also shown in FIG. 2A, 2B, from search platform 13, which in the example of FIG. 15 represents a third-party platform, context data 26 relating to the search history of client subsystem 1 at search platform 13. The context data 26 comprise all data collected during the searches executed by search platform 13 for client subsystem 1 before receiving the search request of activity 10. Within the described example shown in FIG. 15, the context data also comprises the MAC-number of client subsystem and search parameters C, D relating to the search history. The MAC-number enables to associate the context data stored at search engine 13 to the client subsystem 13. Search platform 2 extracts the search parameters C and D from the context data 26 and includes them as adapted search parameters into the adapted search request 25 (activity 12 of FIG. 2A, 2B). By generation the adapted search request 25 comprising the full set of search parameters A, B, C and D, search platform 2 executes an assessment of the databases 27-1 to 27-5, resulting in that the number of databases to be searched get narrowed down to the two databases 27-2 and 27-3, since, as explained above, these two databases have the tables 1 and 2 comprising the content data A, B, C and D stored in their memories. With the (unadapted) search request 24 comprising only search parameters A and B as selected by client subsystem 1, an assessment of the databases 27-1 to 27-5 would result in that the number of databases to be searched is to be higher, since the tables 3 and 4 which also comprise the content A and B in their lines 1 and 2 respectively, would also be included in the response to the search request. Consequently, also databases 27-1 and 27-4 would have to be searched as well. The assessment also yields the results that database 2-5, does not have to be searched at all, since tables 5 and 6 stored at this database neither comprise the content A and B nor C and D.

Examples for the content data A, B, C and D may be data for user names, products, services, calendar dates origins and destinations for data transmissions etc.

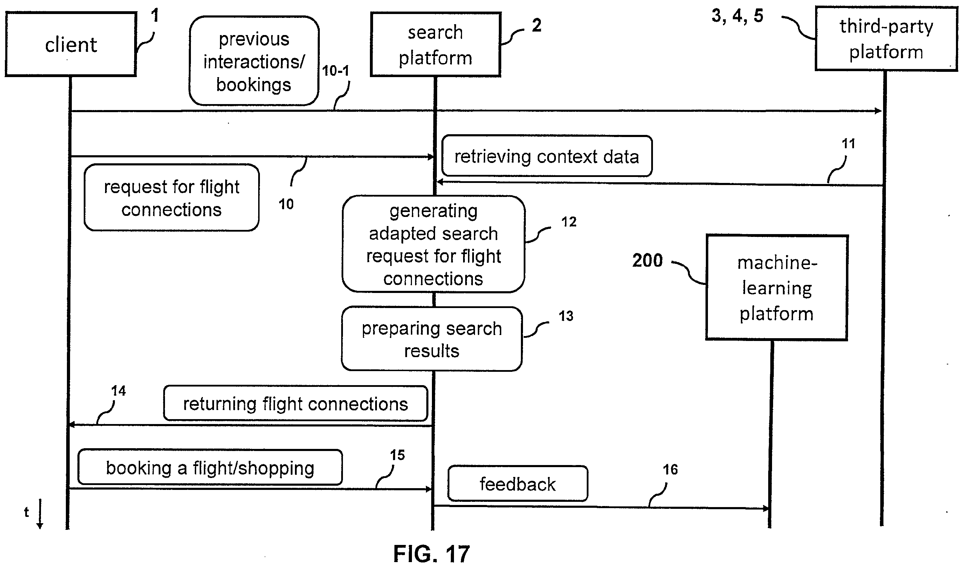

As shown in FIG. 17, the sequence of FIG. 2B may also be applied for purchasing products and services, such as travel offers or flight connections. In an activity 10-1 earlier to activity 10, a user of client 1 has one or more interactions with one or more of third-party concerning the purchase of products and services such as the reservation of flight connections and hotel rooms, the purchase of tickets for a concert, a sports event etc. In activity 10, search platform 2 receives a request for flight connections from Paris to Toronto on 24 December 2023. The user of client 1 has not specified in its request any further details on e. g. preferences on the requested flight connections. Such preferences, such as the number of bags, food preferences may be comprised in the technical data of the request 10.

Furthermore, client 1 and its user is unknown to search platform 2, since search platform 2 has not received any previous requests from client 1 so far and there is also no other previous interaction with client 1 recorded in the history logs of search platform 2. Search platform 2 therefore has limited knowledge of the user of client 1 (and therefore cannot return a personalized reply adapted to the desires of the user). However, in previous interactions 10-1 with third-party platforms 3, 4, 5, the user of client 1 has already, at an earlier stage, requested information on flight connections. Based on the data the client 1 has left on the third-party platforms 3, 4, 5 which may be embedded in context data, such as browser or website cookies and which relate to favourite destinations, preferences, conversion likelihoods etc., it can be derived that client 1 prefers window seats during flights, vegetarian meals and preferably books flight connections with US airlines. When receiving, in activity 11, this information with the context data from the third-party platforms 3, 4, 5, search platform 2 may feed this information into a rule-based algorithm for generating 12 an adaptive search request directed to flight connections from Paris to Toronto on 24 December 2023, with window seats and vegetarian meals available. Search results relating to corresponding flight offers are then prepared in activity 13 and returned 14 to client 1. Subsequently, the user of client 1 selects one of the flight offers and responds to search platform 2 by booking the selected flight with the airline "USAirways" together with vegetarian meals the user mostly prefers and therefore has requested on earlier flights. Therefore, said booking of "USAirways" is included in the feedback 16 and being fed into the rule-based algorithm by machine learning platform 200. Said booking may also be fed into a conversion/click prediction algorithm, providing insights into actions client 1 take after performing the search request or after receiveing the corresponding response(s). The machine-learning platform 200 therefore uses, by rule-based alogithms such as machine-learning based algorithms 23 for the generation of the adapted search parameters for the adapted search request 22, prior search results selected by the client from responses received prior to the reception of the search request 20. This may also apply to any other use case in analoguous manner.

Subsequent requests for flight connections sent by the user of client 1 may therefore receive responses with the preferred vegetarian meals. In some embodiments, the user-related rules on e. g. the user's preferences may be stored in external databases, such as databases 27-1 to 27-5. The user-related rules may be retrieved from these databases when generating the adapted search requests, such as in activity 12.

In some embodiments, context data may also comprise historical data relating to the user such as carried-out searches, bookings, visited websites, and/or user profile data such as demographic data, purchasing power, desires, preferences. In some embodiments, context data may comprise statistical data such as conversion likelihood, loyalty etc.

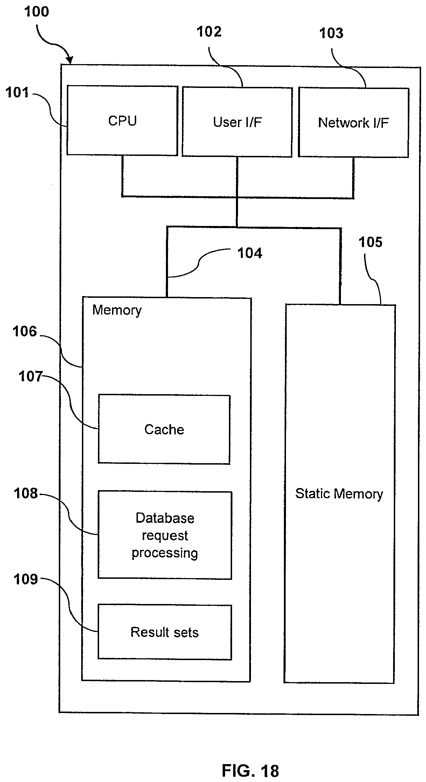

FIG. 18 is a diagrammatic representation of the internal components of a computing machine 100 implementing the functionality of client 1, search platform 2 and third-party system 3, 4, 5. The computing machine 100 includes a set of instructions to cause the computing machine 100 to perform any of the methodologies discussed herein when executed by the computing machine 100. The computing machine 100 includes at least one processor 101, a main memory 106 and a network interface device 103 which communicate with each other via a bus 104. Optionally, the computing machine 100 may further include a static memory 105 and a disk-drive unit. A display, an alpha-numeric input device and a cursor control device may be provided as examples of user interface 102. The network interface device 103 connects the computing machine 100 implementing the computer-implemented engine 1 with the database 10. Furthermore, network interface device 103 also connects the computing machine 100 implementing the search platform 2 with the client 1 and the third-party systems 3, 4, 5.

Computing machine 100 includes a memory 106 such as main memory, random access memory (RAM) and/or any further volatile memory. The memory 106 may store temporary data and program data 107 to facilitate the functionality of the search platform 2, including program data to realize the receiving, from the client, of a search request comprising one or more search parameters and of technical data related to the search request and further to realize the retrieving, from a number of third-party platforms having communicated with the requesting client before receiving the search request, context data for the requesting client based on the technical data. In addition, the memory 106 may store temporary data and program data 107 to realize, by the search platform 2, the generation of an adapted search request based on the one or more search parameters and the retrieved context data; the preparation of a number of search results corresponding to the adapted search request; and the returning of the number of search results to the client. The memory 106 may also store temporary data such as request and response data 109.

A set of computer-executable instructions embodying any one, or all, of the methodologies described herein, resides completely, or at least partially, in or on a machine-readable storage medium, e.g., in the static memory 105 or, when loaded and being executed, in the main memory 106. For example, the instructions may include software processes implementing the search request processing functionality of the search platform 2. The instructions may further be transmitted or received as a propagated signal via the Internet through the network interface device 103 or via the user interface 102. Communication within computing machine 100 is performed via a bus 104. Basic operation of the computing machine 100 is controlled by an operating system which is also located in the memory 106, the at least one processor 101 and/or the static memory 105.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently. Moreover, any of the flowcharts, sequence diagrams, and/or block diagrams may include more or fewer blocks than those illustrated consistent with embodiments and examples.

The terminology used herein is for the purpose of describing particular embodiments and examples, and is not intended to be limiting. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details.

## Claims

1. A method for processing queries from a requesting client, the method comprising:
- receiving, from the client, a search request comprising one or more search parameters and technical data related to the search request;
- retrieving, from a number of third-party platforms having communicated with the requesting client before receiving the search request, context data for the requesting client based on the technical data;
- generating an adapted search request based on the one or more search parameters and the retrieved context data;
- preparing a number of search results corresponding to the adapted search request; and
- returning the number of search results to the client.

2. The method of claim 1, wherein the technical data comprise user names and/or e-mail addresses and/or phone numbers and/or sessionIDs and/or browser cookies.

3. The method of claim 1 or 2, wherein the context data is further based on client-based requests received at at least one of the number of third-party platforms and on corresponding responses and/or third-party technical data generated at the at least one of the number of third-party platforms in response to the client-based requests.

4. The method of any one of claims 1 to 3, wherein the search platform and at least one of the number of third-party platforms belong to disjunct computing systems.

5. The method of claim 4, wherein the disjunct computing systems comprise disjunct distributed computing systems and/or disjunct computing networks.

6. The method of any one of claims 1 to 5, wherein generating the adapted search request comprises the generation of one or more adapted search parameters based on the one or more search parameters and/or the context data.

7. The method of any one of claims 1 to 6, wherein the generation of the adapted search request is based on adapted search parameters comprised in the retrieved context data.

8. The method of any one of claims 6 to 7, wherein the adapted search parameters are generated using machine-learning based algorithms.

9. The method of claim 8, wherein the machine-learning algorithms use, for the generation of the adapted search parameters, prior search results selected by the client from responses received prior to the reception of the search request.

10. The method of any one of claims 1 to 9, wherein generating the adapted search request comprises selecting one or more databases from a number of databases and transmitting the adapted search request to the one or more selected databases.

11. The method of any one of claims 8 to 10, wherein the preparation of the number of search results comprise weighting the search parameters and the adapted search parameters using weighting factors, wherein the weighting factors are generated based on the retrieved context data.

12. A computing machine acting as a search platform for processing queries from a requesting client, the search platform being arranged to execute the method of any one of claims 1 to 11.

13. A computer program product comprising a computer-readable medium storing program code which executes the method of any one of claims 1 to 11 when run by a computer.

14. A computer program implementing the method of any one of claims 1 to 11 when run by a computer.
